# EUROPEAN PATENT APPLICATION

(11) **EP 4 546 226 A1**
(43) Date of publication of application: **30.04.2025**
(21) Application number: 23205999.8
(22) Date of filing: 26.10.2023
(51) Int. Cl.: G06Q 10/00, G06Q 30/04, G06Q 30/06, G06Q 40/04

(54) **NEGOTIATING, ALLOCATING AND ACCOUNTING IT RESOURCES**

(71) Applicant: Deutsche Telekom AG, 53113 Bonn (DE)
(72) Inventor: FLORATH, Andreas, 4730 Raeren (BE)
(74) Representative: RDL Patentanwälte PartG mbB

(57) **Abstract**

A method for brokering IT resources, wherein a brokering node connected to a communication network provides the communication network with a brokering service for IT resources by executing a brokering application for IT resources, the brokering application comprising an orderbook, an accounting module with a plurality of accounts and a cryptographic currency; a brokering node for a communication network and a computer program product.

## Description

The invention relates to a method for brokering IT resources, wherein a brokering node connected to a communication network provides the communication network with a brokering service for IT resources by executing a brokering application for IT resources, the brokering application comprising an orderbook, an accounting module with a plurality of accounts and a cryptographic currency. The invention further relates to a brokering node for a communication network and a computer program product.

Each node connected to the communication network may provide an IT resource to be used by another node of the communication network. The node may comprise an access point of the communication network, an application server connected to the communication network, a cloud storage server connected to the communication network, a terminal device connected to the communication network and the like. The terminal device may comprise a desktop computer or a mobile device like a smartphone, a tablet, a notebook, an loT, Internet of Things, device and the like.

Each node may be operated by a person, i.e., a natural person or a legal person, or act autonomously, i.e. automatically. The IT, Information Technology, resources comprise physical entities, e.g., computing devices, and service entities, e.g., applications. In many cases, IT resources are only required temporarily. Therefore, renting a required IT resource may be favorable over owning the required IT resource from an economical point of view.

On the other hand, many IT resources are by far not used to capacity. In other words, an economic efficiency of IT resources is lower than intended.

In practical cases, time intervals during which IT resources are required are known in advance, and time intervals during which IT resources are available are also known in advance. Accordingly, allocation and usage of IT resources can be planned.

However, it is as tedious and difficult for nodes requiring IT resources to find suitable IT resources as it is for nodes offering IT resources to find suitable nodes requiring IT resources.

It is, therefore, an object of the invention to suggest a method for brokering IT resources which facilitates negotiating, allocating and accounting of IT resources for both nodes requiring the IT resources and nodes offering the IT resources. Further objects of the invention are to provide a brokering node for a communication network and a computer program product.

One aspect of the invention is a method for brokering IT resources, wherein a brokering node connected to a communication network provides the communication network with a brokering service for IT resources by executing a brokering application for brokering IT resources, the brokering application comprising an orderbook, an accounting module with a plurality of accounts and a cryptographic currency. Brokering shall be understood to be a combination of negotiating, allocating and accounting.

The cryptographic currency is preferably included by the brokering application. The included cryptographic currency reduces a dependency of the brokering application. The accounts are configured for containing units of the cryptographic currency. The accounts may be loaded by depositing units of an official currency to be converted to units of the cryptographic currency according to a determined exchange rate.

The communication network may be a radio access network, RAN, e.g., a cellular network. The brokering service is accessible via the communication network. The orderbook, i.e., the digital ledger, is a module of the brokering application and is configured for managing a plurality of entries concerning IT resources. For instance, each entry may be instantiated as a machine-readable object, e.g., a JSON, JavaScript Object Notation, object or a YAML, Yet Another Markup Language, object. The orderbook is visible for both nodes using IT resources and nodes offering IT resources. Each node may add entries to the orderbook.

In the following, the term "user" is collectively used for both the nodes requiring IT resources and nodes offering IT resources, i.e., for each node participating in the brokering method. Users of the IT resources are denoted "consumers" while owners of the IT resources are denoted "providers" for differentiating roles of the users.

The accounting module is configured for providing the consumers and the providers with an economic balance related to an occurring usage of IT resources. The accounting module is further configured for rewarding the brokering node for operating the brokering node.

According to the invention, a maker node connected to the brokering application via the communication network adds a placement entry specifying an IT resource, a first future time interval and a first price per unit of time and unit of the IT resource to the orderbook, the specified IT resource to be provided by a provider and to be consumed by a consumer. The node is denoted "maker node" as the node makes, i.e., creates the placement entry. The unit of time, i.e., time unit may be few hours, e.g., in a range from 1 hour to 24 hours.

A taker node connected to the brokering application via the communication network receives the added placement entry and adds an offer entry to the orderbook, the offer entry specifying the added placement entry, a second future time interval and a second price per unit of time and unit of the IT resource. The node is denoted "taker node" as the node takes, i.e., refers to the placement entry. The specification of the placement entry links the offer entry to the placement entry.

It is noted that neither need the first price and the second price to be identical nor need the first time interval and the second time interval to be identical. Of course, each entry comprises a unique node id assigned to the respective node and a unique entry id assigned to the respective entry.

It is further noted that each of the maker node and the taker node may be the brokering node. The respective node may additionally benefit from a better performance of the brokering application when adding an entry to the orderbook.

The maker node receives the added offer entry and adds a contract entry to the orderbook, the added contract entry specifying the added placement entry and a contracted IT resource. The specification of the placement entry links the contract entry to the placement entry. The contract entry bindingly determines the IT resource to be handed over, i.e., to be provided by the provider and to be used by the consumer. Thus, addition of the contract entry to the orderbook concludes a transaction of IT resources.

The accounting module periodically transfers a determined amount of the cryptographic currency from a first account assigned to a consumer node consuming the specified contracted IT resource to a second account assigned to a provider node providing the specified contracted IT resource as a payment during an intersection time interval of the first future time interval and the second future time interval while a usage of the IT resource is confirmed. The determined amount comprises a determined plurality of units of the cryptographic currency. The intersection time interval comprises a plurality of time units. Of course, both the amount and each time interval may comprise fractions of the respective units.

As long as the confirmation of the usage occurs, the periodical transfer continues. As soon as the confirmation of the usage stops, the periodical transfer stops. The confirmation may stop within the intersection time interval, i.e., before an end of the intersection time interval. Thus, the accounting module ensures a fair payment of the contracted IT resource which neither favors the provider of the IT resource nor favors the consumer of the IT resource.

Favorably, the brokering application determines the payment to be the lowest of the first price and the second price. By adding the contract entry, the first user accepts the lowest of the two prices. As a consequence, the brokering application favors lower prices as compared with higher prices. Negotiation of the IT resource is facilitated as the first user and the second user do not have to explicitly agree on the price.

The provider node may be the maker node and the consumer node may be the taker node. Alternatively, the provider node may be the taker node and the consumer node may be the maker node. The maker node adding the placement entry and providing the IT resource may be denoted a provider-maker. The taker node adding the offer entry and using the IT resource may be denoted a consumer-taker. In contrast, the taker node providing the IT resource and adding the offer entry may be denoted a provider-taker while the maker node consuming the IT resource and adding the placement entry may be denoted a consumer-maker.

An offer of the specified IT resource or a request for the specified IT resource may be added as the placement entry. Accordingly, the offer is added by the provider-maker and the request is added by the consumer-maker.

The provider node may allocate the specified contracted IT resource to the consumer node at the beginning of the intersection time interval. The consumer node may start using the allocated IT resource at the beginning of the intersection time interval. Allocation and usage of the contracted IT resource may occur according to prior art.

The provider node may remove the allocated IT resource from the consumer node at the end of the intersection time interval. The consumer node may stop using the allocated IT resource at the end of the intersection interval. The IT resource is free for being specified by another placement entry.

In an embodiment, each of the provider node and the consumer node periodically transmit alive messages to the accounting module, the transmitted alive messages confirming the usage of the IT resource. The usage of the IT resource is cooperatively confirmed, i.e. the provider node confirms the IT resource to be allocated and the consumer node confirms the IT resource to be used. It shall be understood that the usage of the IT resource requires the IT resource to be allocated.

The cooperative confirmation precludes an unfair behavior of any involved node. The period may be few or a few minutes, i.e., in a range from 1 minute to 10 minutes. The involved nodes are considered to disagree about usage of the IT resource when at least one involved node stops transmitting alive messages within the intersection time interval. In case a disagreement occurs, the brokering application may start a mediation procedure involving the maker node and the taker node.

Of course, the provider node or the consumer node may abort allocation of the IT resource or usage of the IT resource, respectively, within the intersection time interval and transmits an abort message to the accounting module. The accounting module may transfer an amount of the cryptographic currency from the account assigned to the aborting node to the account assigned to the node suffering from the abort as a penalty. The brokering application handles an intentional abort before the end of the intersection time interval preferably at the expense of the aborting node. The aborting provider node is not rewarded for the current unit of time while the aborting consumer node has to pay the current unit of time. The optional penalty even better keeps the involved node from any reckless abort.

The brokering application is preferably provided by a plurality of brokering nodes of the communication network as a distributed application. The brokering application may be denoted a distributed ledger. The higher the plurality of brokering nodes the higher a reliability and the better is a performance of the brokering application.

A computing device, a digital storage, a service application, a connectivity and/or a combination of a computing device, a digital storage, a service application and/or a connectivity is preferably specified as the IT resource. Properties of the computing device may comprise a number and/or a type of CPUs, Central Processing Unit, a size of RAM, Random Access Memory, a location, a mobility, a special hardware, e.g. a GPU, Graphics Processing Unit, an ASIC, Application Specific Integrated Circuit, an FPGA, Field Programmable Gate Array, a camera and the like. Properties of the storage device may comprise a space, a read rate, a write rate and the like. Properties of the service application are an interface, an application programming interface, API, a functionality and the like. Properties of the connectivity may comprise a QoS, Quality of Service, a GBR, Guaranteed Bit Rate and a latency.

The offer entry may specify the complete specified IT resource or part of the specified IT resource as the IT resource to be contracted. In other words, the second user is not required to accept the placement entry as added by the first user. Instead, the second user may specify a less powerful IT resource or, when the IT resource comprises a plurality of separate components, determined components of the IT resource. A provider-maker, as an intermediary, may add a placement entry bundling a plurality of IT resources previously contracted with a plurality of different provider-makers. Apart from that, a consumer-maker may add a placement entry bundling a plurality of IT resources and contract with a plurality of provider-makers each provider-maker providing only part of the bundled IT resources.

The maker node may add a termination entry or a modification entry to the orderbook, the termination entry or the modification entry specifying the added placement entry and deactivating the added placement entry or modifying the added placement entry. The termination entry deactivates the specified placement entry. The modification entry modifies the specified placement entry. Both the termination entry and the modification entry may comprise an entry id of the added placement entry. The termination entry and the modification entry free the orderbook from erroneous, lapsed or deprecated placement entries. Of course, the brokering application automatically deactivates each placement entry with a contract entry satisfying the maker node.

In a favorable embodiment, the brokering application, upon addition of any entry, automatically transfers an amount of the cryptographic currency to a third account assigned to the brokering node as a signing fee. Furthermore, a statistics module of the brokering application, upon addition of any entry, may automatically update a statistics assigned to the maker node or the taker node. The signing fee rewards the brokering node and, thus, allows for a continued operation of the brokering node, i.e., maintains a hardware infrastructure required by the brokering application. The statistics module is configured for collecting statistical data of the involved nodes and updating the statistics of the involved nodes. The third account is identical with the first account or the second account when the brokering node is identical with the maker node or the taker node, respectively.

The signing fee may be determined dependent on the user adding the entry, a type of the added entry, a score derived from the statistics assigned to the node adding the entry, the amount of the cryptographic currency transferred between the first account and the second account or an availability time interval of the added entry in the orderbook. For instance, a signing fee corresponding to a placement entry may be lower for a provider maker than for a consumer maker as the provider is prevented by the added placement entry from arbitrarily disposing the specified IT resource. Apart from that, a signing fee may be generally reduced for a frequent and compliant user who rarely aborts an allocation or a usage of the IT resource. The signing fee corresponding to a contract entry may be denoted brokerage and equal a percentage of the value of the transaction. Again the percentages may depend on the nodes and roles of the nodes. A termination entry may provoke a higher signing fee when the terminated placement entry has been active for shorter time and a lower signing fee when the terminated placement entry has been active for a longer time.

In an embodiment, one of the maker node and the taker node transmits rating data concerning the respective other one of the maker node and the taker node to a rating module of the brokering application. The rating data is for information only and may reflect a reliability and/or an activity of the involved nodes. The brokering application exclusively uses the rating data for displaying. Each involved node may take into account or completely ignore the rating data of other nodes when adding entries to the orderbook.

Apart from that, the brokering application is designed for a completely anonymous operation, i.e., the involved nodes stay anonymous. For instance, a node may always create and subsequently use a new account while using a previous account not any longer. However, the new account does not inherit rating data or statistics from the previous account.

Another object of the invention is a brokering node for a communication network, the brokering node comprising a computing device. The brokering node may be a terminal device for connecting to the communication network or a computing device of the communication network.

According to the invention, the brokering node is configured for carrying out a method according to an embodiment of the invention. The brokering node facilitates negotiating, allocating and accounting of IT resources for maker nodes, taker nodes, provider nodes and consumer nodes.

Still another object of the invention is a computer program product, comprising a digital storage medium storing a program code. The digital storage medium may comprise a hard disk, a solid state disk (SSD), a digital versatile disk (DVD), a Universal Serial Bus (USB) stick, a random access memory (RAM), a nonvolatile memory express (NVMe) and the like and be provided locally or in a cloud connected to the internet, i.e. an internet cloud. The program code may be executed immediately from the storage medium or after an installation.

According to the invention, the program code causes a computing device to provide a communication network with a brokering service for IT resources as a brokering node according to an embodiment of the invention for a communication network when being executed by a processor of the computing device. The computer program product allows for setting up a computing device as a brokering node which facilitates negotiating, allocating and accounting of IT resources for maker nodes, taker nodes, provider nodes and consumer nodes.

An essential advantage of the inventive method is that negotiating, allocating and accounting of IT resources for both nodes requiring the IT resources and nodes offering the IT resources is facilitated. Further advantages are that IT resources are used more efficiently and more economically, that payments are performed automatically, a fraudulent behavior may be handled adequately and that a node may participate in the method anonymously.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

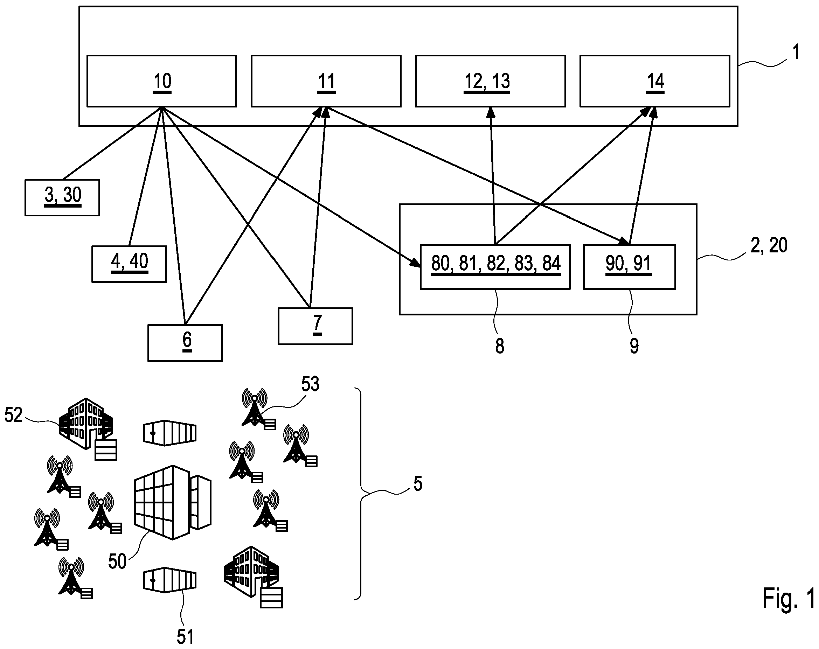

- Fig. 1: schematically shows a brokering node according to an embodiment of the invention for a communication network.

Fig. 1 schematically shows a brokering node 2 according to an embodiment of the invention for a communication network. The brokering node 2 is connected to the communication network and comprises a computing device and an inventive brokering application 1 for the communication network.

The inventive brokering application 1 may be implemented by means of a computer program product with a digital storage medium storing a program code. The program code causes the computing device to provide the communication network with a brokering service for IT resources 5 as a brokering node 2 of the communication network when being executed by a processor of the computing device.

The brokering node 2 is configured for carrying out a method according to the invention as follows for brokering IT resources 5.

The brokering node 2 provides the communication network with a brokering service for IT resources 5 by executing the brokering application 1 for brokering IT resources 5. It is preferred that the brokering application 1 is executed by a plurality of brokering nodes 2 of the communication network as a distributed application.

The brokering application 1 comprises an orderbook 10, an accounting module 11 with a plurality of accounts and a cryptographic currency 14. The brokering application 1 may further comprise a statistics module 12 and/or a rating module 13.

A maker node 3 connected to the brokering application 1 via the communication network may be operated by a first user 30 or act autonomously. The maker node 3 adds a placement entry 80. The placement entry 80 specifies an IT resource 5, a first future time interval and a first price per unit of time and unit of the IT resource 5 to the orderbook 10. The specified IT resource 5 is to be provided by a provider node 6 connected to the communication network and to be consumed by a consumer node 7 connected to the communication network. A computing device 50, a digital storage 51, a service application 52, a connectivity 53 and/or a combination of a computing device 50, a digital storage 51, a service application 52 and/or a connectivity 53 is exemplarily specified as the IT resource 5.

A taker node 4 connected to the brokering application 1 via the communication network may be operated by a second user 40 or act autonomously. The taker node 4 receives the added placement entry 80. The taker node 4 adds an offer entry 81 to the orderbook 10. The offer entry 81 specifies the added placement entry 80, a second future time interval and a second price per unit of time and unit of the IT resource 5. The offer entry 81 may specify the complete specified IT resource 5 or part of the specified IT resource 5 as the IT resource 5 to be contracted.

The maker node 3 receives the added offer entry 81 and adds a contract entry 82 to the orderbook 10. The added contract entry 82 specifies the added placement entry 80 and a contracted IT resource 5.

The accounting module 11 periodically transfers a determined amount 9 of the cryptographic currency 14 from a first account to a second account as a payment 90 during an intersection time interval of the first future time interval and the second future time interval while a usage of the IT resource 5 is confirmed. The brokering application 1 may determine the payment 90 to be the lowest of the first price and the second price.

The first account is assigned to the consumer node 7 of the specified contracted IT resource 5. The second account is assigned to the provider node 6 of the specified contracted IT resource 5.

The provider node 6 may be the maker node 3 and the consumer node 7 may be the taker node 4. In this case, the maker node 3 is called a provider-maker and the taker node 4 is called a consumer-taker. An offer of the specified IT resource 5 may be added as the placement entry 80.

Alternatively, the provider node 6 may be the taker node 4 and the consumer node 7 may be the maker node 3. In this case, the taker node 4 is called a provider-taker and the maker node 3 is called a consumer-maker. A request for the specified IT resource 5 may be added as the placement entry 80.

The provider node 6 may allocate the specified contracted IT resource 5 to the consumer node 7 at the beginning of the intersection time interval and the consumer node 7 starts using the allocated IT resource 5. Each of the provider node 6 and the consumer node 7 periodically transmit alive messages to the accounting module 11 during the usage of the IT resource 5, the transmitted alive messages confirming the usage of the IT resource 5. The provider node 6 may remove the allocated IT resource 5 from the consumer node 7 at the end of the intersection time interval and the consumer node 7 stops using the allocated IT resource 5.

The provider node 6 or the consumer node 7 may abort allocation of the IT resource 5 or usage of the IT resource 5, respectively, within the intersection time interval. The provider node 6 or the consumer node 7 may transmit an abort message to the accounting module 11 and the accounting module 11 transfers an amount 9 of the cryptographic currency 14 from the account assigned to the aborting user 30, 40 to the account assigned to the user 30, 40 suffering from the abort as a penalty.

The maker node 3 may add a termination entry 84 or a modification entry 83 to the orderbook 10, the termination entry 84 or the modification entry 83 specifying the added placement entry 80 and deactivating the added placement entry 80 or modifying the added placement entry 80.

The brokering application 1, upon addition of any entry 8, may automatically transfer an amount 9 of the cryptographic currency 14 to a third account assigned to the brokering node 2 as a signing fee 91. A statistics module 12 of the brokering application 1, upon addition of any entry 8, may automatically update a statistics assigned to the maker node 3 or the taker node 4.

The signing fee 91 is preferably determined dependent on the user 30, 40 adding the entry 8, a type of the added entry 8, a score derived from the user statistics assigned to the node 3, 4 adding the entry 8, the amount 9 of the cryptographic currency 14 transferred between the first account and the second account or an availability time interval of the added entry 8 in the orderbook 10.

Advantageously, one of the first user 30 and the second user 40 transmits rating data concerning the respective other one of the first user 30 and the second user 40 to a rating module 13 of the brokering application 1.

### Reference Numerals

- 1: brokering application
- 10: orderbook
- 11: accounting module
- 12: statistics module
- 13: rating module
- 14: cryptographic currency
- 2: brokering node
- 20: owner
- 3: maker node
- 30: first user
- 4: taker node
- 40: second user
- 5: IT resource
- 50: computing device
- 51: digital storage
- 52: service application
- 53: connectivity
- 6: provider node
- 7: consumer node
- 8: entry
- 80: placement entry
- 81: offer entry
- 82: contract entry
- 83: modification entry
- 84: termination entry
- 9: amount
- 90: payment
- 91: signing fee

## Claims

1. A method for brokering IT resources (5), wherein
- a brokering node (2) connected to a communication network provides the communication network with a brokering service for IT resources (5) by executing a brokering application (1) for IT resources (5), the brokering application (1) comprising an orderbook (10), an accounting module (11) with a plurality of accounts and a cryptographic currency (14);
- a maker node (3) connected to the brokering application (1) via the communication network adds a placement entry (80) specifying an IT resource (5), a first future time interval and a first price per unit of time and unit of the IT resource (5) to the orderbook (10), the specified IT resource (5) to be provided by a provider (6) and to be consumed by a consumer (7);
- a taker node (4) connected to the brokering application (1) via the communication network receives the added placement entry (80) and adds an offer entry (81) to the orderbook (10), the offer entry (81) specifying the added placement entry (80), a second future time interval and a second price per unit of time and unit of the IT resource (5);
- the maker node (3) receives the added offer entry (81) and adds a contract entry (82) to the orderbook (10), the added contract entry (82) specifying the added placement entry (80) and a contracted IT resource (5);
- the accounting module (11) periodically transfers a determined amount (9) of the cryptographic currency (14) from a first account assigned to a consumer node (7) connected to the communication network and consuming the specified contracted IT resource (5) to a second account assigned to a provider node (6) connected to the communication network and providing the specified contracted IT resource (5) as a payment (90) during an intersection time interval of the first future time interval and the second future time interval while a usage of the IT resource (5) is confirmed.

2. The method according to claim 1, wherein the brokering application (1) determines the payment (90) to be the lowest of the first price and the second price.

3. The method according to claim 1 or 2, wherein the provider node (6) is the maker node (3) and the consumer node (7) is the taker node (4) or wherein the provider node (6) is the taker node (4) and the consumer node (7) is the maker node (3).

4. The method according to one of claims 1 to 3, wherein an offer of the specified IT resource (5) or a request for the specified IT resource (5) is added as the placement entry (80).

5. The method according to one of claims 1 to 4, wherein the provider node (6) allocates the specified contracted IT resource (5) to the consumer node (7) at the beginning of the intersection time interval and the consumer node (7) starts using the allocated IT resource (5).

6. The method according to one of claims 1 to 5, wherein the provider node (6) removes the allocated IT resource (5) from the consumer node (7) at the end of the intersection time interval and the consumer node (7) stops using the allocated IT resource (5).

7. The method according to one of claims 1 to 6, wherein each of the provider node (6) and the consumer node (7) periodically transmits alive messages to the accounting module (11) during the usage of the IT resource (5), the transmitted alive messages confirming the usage of the IT resource (5).

8. The method according to one of claims 1 to 7, wherein the provider node (6) or the consumer node (7) aborts allocation of the IT resource (5) or usage of the IT resource (5), respectively, within the intersection time interval and transmits an abort message to the accounting module (11) and the accounting module (11) transfers an amount (9) of the cryptographic currency (14) from the account assigned to the aborting node (3, 4) to the account assigned to the node (3, 4) suffering from the abort as a penalty.

9. The method according to one of claims 1 to 8, wherein a computing device (50), a digital storage (51), a service application (52), a connectivity (53) and/or a combination of a computing device (50), a digital storage (51), a service application (52) and/or a connectivity (53) is specified as the IT resource (5).

10. The method according to one of claims 1 to 9, wherein the offer entry (81) specifies the complete specified IT resource (5) or part of the specified IT resource (5) as the IT resource (5) to be contracted.

11. The method according to one of claims 1 to 10, wherein the maker node (3) adds a termination entry (84) or a modification entry (83) to the orderbook (10), the termination entry (84) or the modification entry (83) specifying the added placement entry (80) and deactivating the added placement entry (80) or modifying the added placement entry (80).

12. The method according to one of claims 1 to 11, wherein the brokering application (1), upon addition of any entry (8), automatically transfers an amount (9) of the cryptographic currency (14) to a third account assigned to the brokering node (2) as a signing fee (91) and a statistics module (12) of the brokering application (1), upon addition of any entry (8), automatically updates a statistics assigned to the maker node (3) or the taker node (4).

13. The method according to claim 12, wherein the signing fee (91) is determined dependent on the node (3, 4) adding the entry (8), a type of the added entry (8), a score derived from the statistics assigned to the node (3, 4) adding the entry (8), the amount (9) of the cryptographic currency (14) transferred between the first account and the second account or an availability time interval of the added entry (8) in the orderbook (10).

14. The method according to one of claims 1 to 13, wherein one of the maker node (3) and the taker node (4) transmits rating data concerning the respective other one of the maker node (3) and the taker node (4) to a rating module (13) of the brokering application (1).

15. The method according to one of claims 1 to 14, wherein the brokering application (1) is provided by a plurality of brokering nodes (2) of the communication network as a distributed application.
